# EUROPÄISCHE PATENTANMELDUNG

(11) **EP 4 495 187 A1**
(43) Veröffentlichungstag der Anmeldung: **22.01.2025**
(21) Anmeldenummer: 24185888.5
(22) Anmeldetag: 02.07.2024
(51) Int. Cl.: C08L 75/04, C08G 18/44

(54) **POLYMER/PARTIKEL-KOMPOSITE MIT THERMOPLASTISCHEN ELASTOMEREN ALS KONTINUIERLICHER PHASE UND POLYMER-KOMPLEX PARTIKELN**

(30) Priorität: 20.07.2023 DE 102023206912
(71) Anmelder: Benecke-Kaliko AG, 30419 Hannover (DE)
(72) Erfinder: Dr. Neumann, Thorsten, 30419 Hannover (DE); Knecht, Matthias, 74679 Weissbach (DE); Dr. Schlottke, Holger, 74679 Weissbach (DE); Dr. Wittmann, Gabriele, 74679 Weissbach (DE); Kanzler, Waldemar, 74679 Weissbach (DE)
(74) Vertreter: Continental Corporation

(57) **Zusammenfassung**

Die vorliegende Erfindung betrifft Kunststoffzusammensetzungen, die eine Matrix aus thermoplastischem Elastomer und ein darin fein verteiltes Pulver umfassen, wobei das Pulver wasserunlösliche Partikel umfasst, die aus einem Komplex aus einem wasserdispergierbaren Polymer mit anionischen funktionellen Gruppen und mehrwertigen Metallkationen oder einem wasserdispergierbaren Polymer mit protonierten anionischen Gruppen gebildet sind. Die vorliegende Erfindung betrifft weiterhin Verfahren zur Herstellung solcher Kunststoffzusammensetzungen, Schichtgebilde, die mindestens eine aus einer solchen Kunststoffzusammensetzung gebildete Schicht aufweisen, und Verwendungen der angegebenen wasserunlöslichen Partikeln zur Vermittlung von verminderter Haftung oder verbesserten Abriebeigenschaften.

## Beschreibung

Die vorliegende Erfindung betrifft Kunststoffzusammensetzungen, die eine Matrix aus thermoplastischem Elastomer und ein darin fein verteiltes Pulver umfassen, wobei das Pulver wasserunlösliche Partikel umfasst, die aus einem Komplex aus einem wasserdispergierbaren Polymer mit anionischen funktionellen Gruppen und mehrwertigen Metallkationen gebildet sind. Die vorliegende Erfindung betrifft weiterhin Verfahren zur Herstellung solcher Kunststoffzusammensetzungen, Schichtgebilde, die mindestens eine aus einer solchen Kunststoffzusammensetzung gebildete Schicht aufweisen, und Verwendungen der angegebenen wasserunlöslichen Partikeln zur Vermittlung von verminderter Haftung oder verbesserten Abriebeigenschaften.

### Stand der Technik

Kalandrierte und extrudierte Polymerfilme auf Basis von TPE (thermoplastischem Elastomer) und TPU (thermoplastischem Polyurethanelastomer) finden im Bereich von Filmen und Multischichtverbundsystemen eine breite Anwendung. Im Stand der Technik werden die Oberflächen dabei nachträglich oberflächenbehandelt, was durch Lackieren, Sprühen, Plasmaabscheidung oder Plasmaätzen erfolgen kann. Eine derartige Oberflächenmodifikation ist beispielsweise nötig, um Resistenz gegen Umwelteinflüsse zu vermitteln. Darüber hinaus werden haptische Eigenschaften der Oberflächen gesteuert.

Der zusätzliche Bearbeitungsschritt ist jedoch mit dem Nachteil eines höheren Herstellungsaufwands und damit einhergehend mit höheren Kosten verbunden.

Es besteht daher ein Bedarf für ein Herstellungsverfahren für Oberflächen aus den genannten Materialien, bei dem die gewünschten Oberflächeneigenschaften möglichst ohne zusätzliche Nachbearbeitungsschritte eingestellt werden können, indem sich diese während der Herstellung der Oberfläche direkt erzielt werden. Dazu müsste eine Formulierung der Zusammensetzung gefunden werden, die einerseits ähnlich Verarbeitet werden kann, wie die aus dem Stand der Technik bekannten Formulierungen von TPE oder TPU, bei der sich aber andererseits die gewünschten Oberflächeneigenschaften direkt aus der Verarbeitung ergeben.

Die vorliegende Erfindung befasst sich mit diesem Bedarf.

### Beschreibung der Erfindung

In den dieser Erfindung zu Grunde liegenden Untersuchungen wurde überraschend gefunden, dass sich vorteilhafte Eigenschaften wie eine verbesserte Abriebfestigkeit durch den Einbezug von Partikeln erzeugen lässt, die aus wässrigen Polymerdispersionen von Lackanwendungen durch Zugabe von Salzen mehrwertiger Kationen oder durch das Einleiten von CO₂ in die Dispersion erzeugen lassen. Die Bildung der Partikel durch die Zugabe von Salzen mehrwertiger Kationen beruht dabei darauf, dass sich Komplexe dieser Kationen mit den in den dispergierten Polymeren enthaltenen anionischen funktionellen Gruppen bilden, über die die Polymere stabil in der Dispersion gehalten werden. Auf diese Weise wird die Dispersion destabilisiert und in der Folge bilden sich feste Polymer/Metall-Komplexe bilden. Bei der Zugabe von CO₂ beruht die die Destabilisierung der Dispersionen darauf, dass der pH-Wert graduell in den sauren Bereich verschoben wird, wodurch ebenfalls die stabilisierende Funktion der anionischen Gruppen neutralisiert und eine Ausfällung der Polymere aus der Dispersion initiiert wird.

Gemäß einem ersten Aspekt betrifft die vorliegende Erfindung demzufolge eine Kunststoffzusammensetzung, die eine Matrix aus thermoplastischen Elastomer und ein darin dispergiertes Pulver umfasst, wobei das Pulver wasserunlösliche Partikel enthält, die aus einem Komplex aus einem wasserdispergierbaren Polymer mit anionischen funktionellen Gruppen und mehrwertigen Metallkationen oder einem wasserdispergierbaren Polymer mit protonierten anionischen Gruppen ausgebildet sind.

Protonierte anionische Gruppen sind dabei insbesondere protonierte Carbonsäuregruppen, mit dem Polymer veresterte -OSOaH-Gruppen, Sulfonsäuregruppen, Phorphorsäure- oder Phorphonsäuregruppen.

Die Formulierung "aus einem thermoplastischen Elastomer" ist nicht einschränkend in einer Weise zu verstehen, dass das thermoplastische Elastomer das gesamte Polymer (mit Ausnahme von Polymer in den Partikeln) in der Kunststoffzusammensetzung bereitstellen muss. Der Anteil des thermoplastischen Elastomers sollte aber so hoch sein, dass der Zusammensetzung relevante elastomere Eigenschaften vermittelt werden. In einer bevorzugten Ausführungsform entfallen mindestens 50 Gew.-%, weiter bevorzugt mindestens 70 Gew.-% und noch weiter bevorzugt mindestens 80 Gew.-% der Polymere in der Kunststoffzusammensetzung (ohne Berücksichtigung der Polymere in den darin enthaltenen Partikeln) aus thermoplastischen Elastomere.

Die wasserunlöslichen Partikel, die in die Matrix aus thermoplastischen Elastomer einbezogen werden, und die auf der Fällung von Dispersionspolymeren durch Zugabe von mehrwertigen Metallkationen beruhen, enthalten einerseits die mehrwertigen Kationen, die beim Verbrennen der Partikel als Oxide zurückbleiben, und andererseits ein organisches Polymer, das die Polymerbasis der wässrigen Dispersionen, die zur Herstellung der Partikel mit einer die mehrwertigen Kationen enthaltenden Lösung behandelt wird. Durch die Bildung der Komplexe mit dem organischen Polymer liegen die Kationen in den Partikeln homogen verteilt vor.

Der Anteil der mehrwertigen Kationen in den Partikeln unterliegt keine relevanten Beschränkungen, wobei dieser aber in der Regel von der Menge der in dem Polymer enthaltenen funktionellen Gruppen, die mit den mehrwertigen Kationen Komplexe bilden, abhängt. Als geeigneter Gehaltsbereich kann für die erfindungsgemäßen Partikel ein Gehalt von 0,01 bis 50 Gew.-%, bevorzugt von 0,1 bis 20 Gew.-% und weiter bevorzugt 0,01 bis 5 Gew.-% angegeben werden. Der Gehalt der Kationen kann dabei z.B. mittelbar über den Aschegehalt aus der Verbrennung der Partikeln bestimmt werden, wobei angenommen werden kann, dass die Asche die mehrwertigen Kationen in Form der entsprechenden Oxide enthält (für die Berechnung des Kationengehalts wird vom Aschegehalt der auf Sauerstoff in Oxiden entfallende Gewichtsanteil abgezogen). Die Art der mehrwertigen Kationen kann über eine Elementaranalyse bestimmt werden. Hinsichtlich der vorstehend genannten Obergrenzen ist weiterhin darauf hinzuweisen, dass sich höhere Kationengehalte insbesondere dann ergeben, wenn die Partikel neben in Komplexen gebundenen mehrwertigen Kationen zusätzliches Salz von mehrwertigen Kationen enthalten.

Bevorzugte mehrwertige Kationen, die in den erfindungsgemäßen Partikeln verwendet werden können, sind in der Regel mehrwertige Kationen, die biologisch unbedenklich und einfach verfügbar sind, wie beispielsweise Barium, Calcium, Magnesium, Zink, Zinn, Eisen, Aluminium, oder Kupfer. In einer besonders bevorzugten Ausführungsform handelt es sich bei den mehrwertigen Kationen um Calciumionen. In einer anderen bevorzugten Ausführungsform handelt es sich bei den mehrwertigen Kationen um Zinkionen. Im Schnittbild einer erfindungsgemäßen Kunststoffzusammensetzung können solche Partikel anhand der einheitlichen Verteilung der mehrwertigen Kationen im Bereich der Partikel, die von größeren Bereichen des Matrixelastomers umschlossen sind, identifiziert werden.

Das Polymer, dass in den Partikeln enthalten ist, unterliegt ebenfalls keinen relevanten Beschränkungen, d.h. bei dem Polymer kann es sich um jedes Polymer handeln, das als stabile wässrige Dispersion oder Mikrosuspension bereitgestellt werden kann. Bei dem Polymer kann es sich insbesondere um Polyurethane, Polyvinylbutyrale, Polyurethan-Polyharnstoffe, Polyester, Polyacrylate, Polyolefine, Polyvinylchlorid, Silikone, Siloxane, Polyvinylidenfluorid, sowie Copolymere, Blends oder Mischungen davon handeln. Zusätzlich können auch biobasierte oder abbaubare Polymer-Dispersionen wie PBS (Polybutylensuccinat), PBAT (Polybutylenadipatterephthalat), PHB (Polyhydroxybuttersäure), PLA (Polymilchsäure) oder PEF (Polyethylenfuranoat) verwendet werden. Bevorzugt ist es, wenn das Polymer sortenrein, d.h. nur aus einem der vorgenannten Polymertypen bestehend, ist.

Polyurethan-Polyharnstoffe sind im Kontext der hier beschriebenen Erfindung Polymere, in denen die Wiederholungseinheiten sowohl durch Urethan (-NH-CO-O-), als auch durch Harnstoffgruppen getrennt sind. Solche Polyurethan-Polyharnstoffe können hergestellt werden durch Umsetzung von Polyisocyanten mit Polyolen, Polyaminen und Verbindungen mit NH und OH Gruppen, oder durch die Zugabe von Wasser zu Polyisocyanatpräpolymeren, bei denen ein Teil der Isocyanatgruppen zu NH₂ abgebaut wird, das anschließend mit noch vorhandenem Isocyanat zu Harnstoffgruppen reagiert.

Die Polymere sind zur Bildung einer Dispersion in Wasser mit anionischen Gruppen funktionalisiert, d.h. solche Gruppen sind kovalent an das Polymer angebunden. Die Art des Polymers in den Partikeln lässt sich dabei durch übliche Analyseverfahren, wie beispielsweise IR-Spektroskopie oder Festkörper-NMR-Messungen bestimmen.

Es ist auch denkbar, dass die Partikel zusätzlich Komplexe von mehrwertig geladenen Tensiden und/oder Dendrimeren enthalten, die verwendet werden können um Polymere in wässriger Dispersion zu stabilisieren. Solche Tenside oder Dendrimere können zusätzlich zu den Polymeren mit anionischen funktionellen Gruppen verwendet werden, oder aber mit Polymeren verwendet werden, die selbst keine anionischen funktionellen Gruppen enthalten, so dass für die Dispergierung der Polymere entsprechende Tenside oder Dendrimere zugegeben werden müssen. Grundsätzlich erfolgt die Destabilisierung und "Ausfällung" der Polymere aus der Dispersion auch in diesem Fall aber auf ähnliche Weise, indem die dispersionstabilisierende Funktion der Tenside oder Dendrimere durch die Zugabe der mehrwertigen Kationen gestört wird. Da in diesem Fall auch aus den Tensiden oder Dendrimeren ein Komplex mit einer deutlich herabgesetzten Hydrophilie gebildet wird, bilden sich auch in diesem Fall Partikel, die das Polymer und die Komplexe aus Tensiden und/oder Dendrimeren enthalten. Die Angabe "wasserdispergierbar" ist im Kontext der Erfindung damit so zu verstehen, dass die Polymere entweder von sich aus wasserdispergierbar sind (bei einem pH-Wert, bei dem funktionelle Gruppen im Polymer in anionischer Form vorliegen) oder durch die Zugabe von mehrwertig geladenen Tensiden oder Dendrimeren in Wasser dispergiert vorliegen. In einer bevorzugten Ausführungsform enthalten die wasserunlöslichen Partikel Polymere, die selbst funktionelle anionische Gruppen enthalten, und die in den Partikeln in Form von Komplexen mit den mehrwertigen Kationen gebunden sind.

Die in das Polymer eingebundenen anionischen Gruppen sind bevorzugt ausgewählt aus Carboxylatgruppen (-CO₂⁻), Phosphatgruppen, Phosphonatgruppen, Sulfatgruppen, oder Sulfonatgruppen oder mehreren dieser Gruppen. Aufgrund der Verfügbarkeit als Monomere sind Carboxylatgruppen, Phosphat und Sulfatgruppen bevorzugt. In den Polymerdispersionen, die zur Herstellung der erfindungsgemäßen Partikel verwendet werden, liegen diese meist als Salze mit einwertigen Kationen, z.B. in Form von Ammoniumionen, Natrium-, Kalium- oder Lithiumionen vor, die durch Zugabe der mehrwertigen Kationen (aufgrund des Chelat-Effekts) verdrängt werden, so dass die einwertigen Kationen in den erhaltenen Partikeln in der Regel nur noch in Spuren enthalten sind.

In einer bevorzugten Ausführungsform handelt es sich bei den Polymer, aus dem die Partikel gebildet sind, um ein Polyurethan, das Einheiten von Diaminoverbindungen bzw. Dihydroxyverbindungen enthält, die zusätzlich Sulfonat- und/oder Carboxylatgruppen tragen, wie beispielsweise die Natrium-, Lithium-, Kalium-, oder tert-Amin-Salze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulphonsäure, der analogen Carbonsäuren, der Dimethylolpropionsäure, der Dimethylolbuttersäure, der Umsetzungsprodukte im Sinne einer Michaeladdition von 1 Mol Diamin wie z.B. 1 ,2-Ethandiamin oder Isophorondiamin mit 2 mol Acrylsäure oder Maleinsäure.

In einer anderen bevorzugten Ausführungsform handelt es sich bei dem Polymer, aus dem die Partikel gebildet sind, um ein Acrylatpolymer. Die Bezeichnung "Acrylatpolymer" bezeichnet im Kontext der hier angegebenen Erfindung Polymere der Acrylsäure und Methacyrlsäure und Estern dieser Säuren, sowie gemischte Polymere mit Acrylsäure und Methacyrlsäure, sowie Estern dieser Säuren. Anionische Gruppen in solchen Acrylatpolymeren sind bevorzugt Carboxylatgruppen, die auf Acrylsäure, Methacrylsäure, Malein- oder Fumarsäure, Itakonsäure, 3-Butensäure oder andere Monomere zurückgehen, die Copolymere mit (Meth)Acylaten bilden. Eine weitere Klasse von bevorzugt in Acrylatpolymeren verwendeten funktionellen Gruppen zur Vermittlung von Dispersionsfähigkeit für die Polymere sind, Sulfat- und Sulfonatgruppen, oder Phosphat oder Phosphonatgruppen. Solche Gruppen können beispielsweise durch Einpolymerisieren von Vinylsulfonsäure oder Vinylphosphonsäure in das Acrylatpolymer einbezogen werden.

In einer weiteren bevorzugten Ausführungsform handelt es sich bei dem Polymer, aus dem die Partikel gebildet sind, um ein Polysiloxan.

Die Größe der Partikel kann im Hinblick auf den Zweck der späteren Verwendung der Partikel vorteilhaft eingestellt werden, wobei sich die Partikelgröße in den meisten Fällen im Bereich von 1 bis 500 µm und bevorzugt im Bereich von 5 bis 100 µm bewegt. Diese Partikelgröße bezeichnet im Kontext der hier angegebenen Erfindung die mittlere Partikelgröße (D50), die mit einem für deren Bestimmung geeigneten Verfahren (wie Laserbeugung, beispielsweise unter Verwendung eines Partikelgrößen Analysators der Firma Anton Paar) bestimmt wird. Für eine Verarbeitung zu Folien, die beispielsweise mit Hilfe eines Extruders oder Kalander hergestellt werden, ist eine Partikelgröße von < 500µm geeignet, während bei Beschichtungen, beispielsweise in Mehrschichtverbundsystemen, und Partikelgröße von < 100 µm anzustreben ist.

Wenn die Partikel, die in einer Fällung von Dispersionspolymeren gebildet werde, die für eine spätere Verwendung gewünschte Partikelgröße nicht oder nicht in wünschenswertem Umfang aufweisen sollten, kann diese durch einen nachgeschalteten Bearbeitungsschritt eingestellt werden. Ein hierzu besonders geeigneter und schonender Mahlprozess, bei dem ein unerwünschter Abbau der Polymere in den Partikeln weitgehend vermieden wird, ist der Einsatz eines Turbo-Rotor-Systems (beispielsweise Fa. Mahltechnik Görgens GmbH). Eine solche Mahlbehandlung erlaubt nicht nur die Einstellung einer gewünschten Partikelgröße mit einer einheitlichen Partikelgrößenverteilung, sondern vermeidet auch das Verkleben von Partikeln und kann mit einer Trocknung der Partikel kombiniert werden. Mit einer solchen Behandlung von konnten z.B. im Kontext der beschriebenen Erfindung einsetzbaren Partikeln konnte ausgehend von einer Feuchte von 4,6 % eine Restfeuchte von > 0,3 % und eine Korngröße von 98% der Partikel (bezogen auf das Gewicht) von > 75 µm erreicht werden.

Wenn die Partikel aus wässrigen Lackdispersionen auf Basis von Polyestern mit ungesättigten Gruppen wie Acrylat- oder Vinylgruppen gebildet sind, können diese Gruppen durch radikalische Vernetzung (initiiert z.B. durch UV- oder Elektronenbestrahlung) vernetzt werden, ohne dass die Zugabe von weiteren Additiven erforderlich ist. Es ist aber möglich, dass der Dispersion die Vernetzung unterstützende Additive wie mehrfach ungesättigte organische Verbindungen zugesetzt werden, die im Rahmen der Vernetzung kovalent in die Partikel eingebunden werden. Als Beispiele von solchen Vernetzeradditiven sind beispielsweise Polyepoxidverbindungen, Polyisocyanate oder Carbodiimide zu nennen. Solche Vernetzter können auch zur Vernetzung von anderen Basispolymeren der Lackdispersion, beispielsweise Polyurethanen, Polyamiden, Silikonen, Acrylaten, Chloride Polymere (PVC), Polyester, Polyether, Nitrile, PVDF, Epoxide, oder Copolymeren verwendet werden, so dass die resultierenden Partikel vernetzte entsprechende Polymere enthalten. Bei den in Lacken enthaltenen Polymeren handelt es sich oft um Polymere oder Copolymere mit geringem Molekulargewicht, die auch als "Primer" bezeichnet werden. Auf diese Weise werden Lacke mit vergleichsweise geringer Viskosität erhalten

Neben den gegebenenfalls vernetzten Polymeren können die Lackdispersionen zusätzlich Schichtsilikate wie Acematt TS100 oder Mattierungsmittel enthalten. Es wurde beobachtet, dass der Einbezug solcher Partikel in die Polymermatrix zu einer wesentlich besseren Kompatibilität mit dem thermoplastischen Elastomer führt, weil die Additive vielfältige Interaktionen mit dem Elastomer eingehen. Beispielsweise verbleiben die Additive an der Oberfläche der Partikel und vermindern so deren Oberflächenenergie. Zusätzlich können haftungsverbessernde und Dispergieradditive in Lackdispersionen eine Stabilisierung der Partikel in der Polymermatrix vermitteln.

Eine typische Lackdispersion, die zur Herstellung von Partikeln verwendet werden kann, die in den erfindungsgemäßen Kunststoffzusammensetzungen eingesetzt werden können (so dass die Partikel eine vergleichbare Zusammensetzung aufweisen wie die Lackdispersionen, aus denen sie hergestellt wurden), ist in der folgenden Tabelle angegeben:

| Rezeptur Bestandteil | Gew.-% | Funktion |
|---|---|---|
| Polymerdispersion oder Mischungen (anionisch oder neutral anionisch gemischt) (Festkörper 20-70%) | 10-70 | Chemische und mechanische Filmeigenschaften |
| Additive | 1-10% | z.B. Entschäumer, Dispergieradditive, Verlaufsmittel, Mattierungmittel, Konservierungsmittel, Verarbeitungshilfsmittel, |
| Füllstoffe/Pigmente | 0-70 | Farbgebung, Deckvermögen |
| Vernetzer | 0-10 | Intermolekulare chemische Vernetzung (radikalisch, thermisch, physikalisch) |
| Wasser | 5-30 | Verdünnung |
| Org. Lösungsmittel | 0-10 | Verdünnung, Substratbenetzung |

Solche Lacke weisen meist eine Feststoffgehalt im Bereich von 10 bis 50 Gew.-% auf.

Ein thermoplastisches Elastomer ist im Kontext der vorliegenden Erfindung gemäß dem allgemeines Verständnis dieses Begriffs ein Polymer bzw. Kunststoff, der sich bei Raumtemperatur vergleichbar einem klassischen Elastomer verhält, sich jedoch unter Wärmezufuhr plastisch verformen lässt und somit ein thermoplastisches Verhalten zeigt. Ein "thermoplastisches" Polymer weist demgegenüber bei Gebrauchstemperatur (etwa 25 °C) keine relevanten elastischen Eigenschaften auf. Im Kontext dieser Erfindung soll als elastisches Material oder Elastomer ein Material mit einem E-modul von 50 MPa oder weniger und bevorzugt von 10 MPa (bestimmt gemäß ISO 527) oder weniger verstanden werden, während ein reguläres thermoplastische Polymer ein E-modul von mehr als 50 MPa, aufweist. Thermoplastische Elastomere (TPE) umfassen in der hier angegebenen Erfindung alle bekannten Gruppen thermoplastischer Elastomere einschließlich thermoplastische Styrol Block Copolymere (TPE-S), thermoplastische Polyolefine (TPO), thermoplastische Vulkanisate (TPV), thermoplastische Polyurethane (TPU), thermoplastische Copolyerster (TPE-E), thermoplastische Polyesterelastomere (TPC), thermoplastische Polyetheramide (TPE-A), thermoplastische Polyolefinelastomere (POE), und Polyolefin Block Copolymere (OBC).

In der erfindungsgemäßen Kunststoffzusammensetzung ist das thermoplastische Elastomer als "Matrix" ausgebildet, d.h. es umschließt die Partikel des darin einbezogenen Pulvers, wobei diese entweder kleinere aggregierte Ansammlungen in der Matrix bilden oder als einzelne von dem Matrixpolymer umschlossene Partikel vorliegen.

Geeignete Materialien, aus denen das thermoplastische Elastomer gebildet sein kann, umfassen beispielsweise EPDM (Ethylen-Propylen-Dien-Kautschuk) oder Mischungen davon mit Polyolefinen, bevorzugt in Form von Polypropylen. Solche Mischungen können als TPO (thermoplastic polyolefin) oder TPV (thermoplastic vulcanisate = vernetztes "thermoplastic polyolefin") verwendet werden. Ein besonders geeignetes Polypropylen, das in solchen Mischungen verwendet werden kann, ist beispielsweise ein Polypropylen mit einer Dichte von 0,90 bis 0,91 g/cm³. Weitere geeignete thermoplastische Elastomermaterialien umfassen Ethylenacyrlatkautschuk (AEM) und Acyrlatkautschuk (ACM), bevorzugt in Kombination mit Polyamid, thermoplastische Polyesterelastomere sowie thermoplastische Polyurethanelastomere (TPU).

Als EPDM ist ein Ethylen-Propylen-Dien-Kautschuk mit einem Ethylengehalt im Bereich von 45 bis 75 Gew.-% und insbesondere 45 bis 55 Gew.-% bevorzugt. Der Diengehalt liegt hier zweckmäßig im Bereich von 0,1 bis 12 Gew.-%, bevorzugt im Bereich von 2 bis 10 Gew.-% und besonders bevorzugt im Bereich von 3 bis 9 Gew.-%. Als Diene können hierbei jegliche in EPDM eingesetzten Diene verwendet werden, wobei als bevorzugte Diene Cyclopentadien, Ethylidennorbornen und 1,4-Hexadien angegeben werden können.

Neben den Partikeln und dem thermoplastischen Elastomer kann die erfindungsgemäße Kunststoffzusammensetzung ein oder mehrere weitere Additive zur Eigenschaftssteuerung und -optimierung enthalten. Derartige Additive umfassen, sind aber nicht beschränkt auf anorganische Füllstoffe, Hand-Modifier, Mattierungsmittel, Vernetzer, Nanopartikel, Stabilisatoren, Farbmittel oder Pigmente. "Hand-Modifier" sind in diesem Zusammenhang oberflächenaktive Substanzen, meist in Form von Silikonen oder Silkondispersionen, die als Polymere oder Oligomere, unvernetzt, teilvernetzt oder vollvernetzte Flüssigkeiten oder Partikel vorliege. "Hand-Modifier" bestimmen die haptischen Eigenschaften des Materials, und können aus Polyurethanen (auf Basis von Polyester, Polyether, oder Polycarbonatpolyolen), vernetzten und unvernetzten Silikonen Polyamiden, UHMWPE (ultrahochmolekularem Polyethylene), sowie einfach und mehrfach fluorierten Polymere (z.B. PVDF oder PVF) gebildet sein. Weitere in den Zusammensetzungen verwendbare Hand-Modifier sind Keramikpartikel und Polymerpartikel mit Kern-Schale Struktur.

Wie vorstehend bereits beschrieben können die angegebenen Kunststoffzusammensetzungen vorteilhaft für die Herstellung von Schichtgebilden verwendet werden, die konventionell mit einer Schicht hergestellt werden, die sich durch das Fehlen der vorstehend für die erfindungsgemäßen Kunststoffzusammensetzungen angegebenen Partikel unterscheiden. Demzufolge betrifft die vorliegende Erfindung in einem weiteren Aspekt ein Schichtgebilde mit mindestens einer Schicht, die aus einer Kunststoffzusammensetzung wie vorstehend beschrieben gebildet ist. Bei dem Schichtgebilde handelt es sich bevorzugt um eine ein- oder mehrschichtige Folie.

In einer besonders bevorzugten Ausführungsform bildet die Kunststoffschicht die oberste strukturelle Schicht des Schichtgebildes bildet. Der Ausdruck "oberste strukturelle Schicht" bezeichnet dabei dem Umstand, dass die Schicht mit einer Dicke ausgebildet ist, die über die für z.B. Lackschichten übliche Dicke hinausgeht, und schließet nicht aus, dass über dieser Schicht noch Schichten mit nicht strukturellen Charakter angeordnet sind.

Durch die in eine solche Schicht einbezogenen Partikel kann der Schicht ein bestimmter haptischer Eindruck (z.B. eine bestimmte Rauhheit) vermittelt werden, wenn die Partikel in der Schicht "hervorstehen", d.h. wenn die Schicht in Bereichen, in denen keine Partikel vorliegen, ein niedrigeres Niveau aufweist als in Bereichen, in denen die Partikel vorliegen. In einer bevorzugten Ausführungsform ist die Schicht aus der Kunststoffzusammensetzung demzufolge so ausgebildet, das Partikel in der Schicht haptisch auf der Oberfläche der Schicht erkennbar sind.

Mit Hilfe des Einbezugs der Partikel können der Kunststoffzusammensetzung, bzw. einer aus einer solchen ausgebildeten Schicht vielfältige vorteilhafte Oberflächeneigenschaften vermittelt werden, wie beispielsweise eine Reduzierung der Haftung auf bestimmten Materialien, Anti-Block Eigenschaften oder Abriebeigenschaften. Gemäß einem weiteren Aspekt betrifft die vorliegende Erfindung demzufolge die Verwendung von wasserunlöslichen Partikel, wie sie im vorstehenden angegeben wurden, zur Einstellung von Oberflächeneigenschaften von Kunststofffilmen, die aus einer Kunststoffmatrix aus thermoplastischem Elastomer und solchen Partikeln gebildet sind.

Eine Eigenschaft, die sich durch diese Partikel vermitteln und verbessern lässt, ist beispielsweise die Reduzierung des Anhaftens des thermoplastischen Elastomers bei hohen Temperaturen auf Metallteilen, die bei der Verarbeitung der Kunststoffzusammensetzung eingesetzt werden. Eine solche reduzierte Haftung erlaubt es, die Vorrichtungen zur Herstellung aus der Kunststoffzusammensetzung gebildeter Produkte bei höheren Geschwindigkeiten zu fahren und/oder die Ausschussmenge bei der Verarbeitung zu reduzieren. Zudem kann das Hinzufügen der Partikel die Notwendigkeit komplexerer Beschichtungen der Metalle vermieden. In einer Ausführungsform betrifft die vorliegende Erfindung daher eine Verwendung der angegebenen Partikel in Kunststoffzusammensetzungen zur Vermittlung einer verminderten Haftung der Zusammensetzungen an Metall und insbesondere Stahloberflächen. Die Haftung wird dabei bestimmt durch die Kraft, die erforderlich ist einen Film von der Kunststoffzusammensetzung in einem Winkel von 90° von einer entsprechenden Metalloberfläche abzuziehen, und wird gegen eine Referenzprobe, die sich durch die Abwesenheit der Partikel in der Kunststoffzusammensetzung von der erfindungsgemäßen Kunststoffzusammensetzung unterscheidet, bestimmt. Vorzugsweise werden die Partikel in einer Menge in die Kunststoffzusammensetzung einbezogen, dass sich die Abzugskraft um mindestens 10%, weiter Bevorzugt mindestens 20 % und noch weiter bevorzugt mindestens 30% gegeben über der Probe ohne Partikel vermindert.

Durch den Zusatz der Partikel können den thermoplastischen Elastomeren auch Anti-Block Eigenschaften vermittelt werden. Solchen Eigenschaften werden in der hier angegebenen Erfindung durch eine Mikrorauigkeit an der Kunststoffoberfläche vermittelt, die zur Folge hat, dass sich beim Aufeinanderlegen von Folien aus der Zusammensetzung eine hauchdünne Luftschicht als Trennschicht bildet. Eine solche kann bei Multischichtverbundsystemen wie Förderbändern, Kunstleder oder Antriebsriemen genutzt oder zur Selbstreinigung von Schläuchen durch geringere Anhaftung eingesetzt werden. Eine einer weiteren Ausführungsform betrifft die vorliegenden Erfindung demzufolge die Verwendung der vorstehend beschriebenen Partikel zur Vermittlung von Anti-Block-Eigenschaften in Filmen oder Folien, die aus einer Kunststoffzusammensetzung auf der Basis von thermoplastischen Elastomeren gebildet ist.

Zudem betrifft die vorliegende Erfindung entsprechend auch ein Förderband, ein Kunstleder oder einen Antriebsriemen mit einer strukturierten äußeren Oberfläche, die Oberfläche aus eine Kunststoffzusammensetzung, wie sie im vorstehenden beschrieben wurde, gebildet ist. Ein Kunstleder bezeichnet hierbei ein Schichtgebilde mit einer oberen Schicht, die aus der vorstehend angegebenen Kunststoffzusammensetzung gebildet ist, wobei gegebenenfalls auf dieser Schicht noch ein oder mehrere weitere Lackschichten, bevorzugt als transparente Schichten, angeordnet sein können, und das weiterhin eine textile Trägerschicht und/oder eine Träger- oder Zwischenschicht aus PVC, Polyolefin oder einem Polyurethanschaum aufweist, sowie gegebenenfalls zwischen den einzelnen Schichten angeordnete Klebstoffschichten.

Die vorliegende Erfindung betrifft darüber hinaus einen Schlauch für den Transport von Gasen, Feststoffen oder Flüssigkeiten, bei dem zumindest die Innenseite des Schlauchs, die im Rahmen des Transports mit den Feststoffen oder Flüssigkeiten in Kontakt kommt, aus einer erfindungsgemäßen Kunststoffzusammensetzung gebildet ist. Dabei vermitteln die auf der Innenseite der Kunststoffzusammensetzung vorliegenden Partikel einen geringen Kontaktwinkel und einstellbare geringe Gleitreibung, was die Energieeffizienz, mit der die Medien durch den Schlauch transportiert werden verbessert, insbesondere wenn als Matrix in der Kunststoffzusammensetzung Polyamidpolymere verwendet werden. Der Schlauch kann mit einer Schicht aus der erfindungsgemäßen Kunststoffzusammensetzung gebildet sein (wobei dies dann an der Außen- und Innenseite des Schlauchs vorliegt) oder der Schlauch kann mehrere Schichten aufweisen, wobei dann die innerste Schicht aus der Kunststoffzusammensetzung gebildet ist.

Durch den Zusatz der Partikel können den thermoplastischen Elastomeren darüber hinaus verbesserte Abriebeigenschaften vermittelt werden. So wurde festgestellt, dass Formkörper oder Folien, die aus einer thermoplastischen Elastomerzusammensetzung gebildet war, die entsprechende Partikel enthielt zum Teil eine bis zur 100 % verbesserte Abriebeigenschaft (bestimmt Mittels Martindale Cotton Duck 10 Test) aufweisen. Es wird vermutet, dass dieser Effekt auf einem Zusammenspiel physikalischer, ionischer und chemischer Anbindung zwischen den Partikeln und der Polymermatrix beruht. Gemäß einem weiteren Aspekt betrifft die vorliegende Erfindung daher auch die Verwendung der vorstehend angegebenen Partikel zur Verbesserung der Abriebeigenschaften von Formkörpern oder Folien, bei denen die äußere Oberfläche mindestens teilweise durch eine Kunststoffzusammensetzung auf Basis eines thermoplastischen Elastomers gebildet ist.

Ein einem noch weiteren Aspekt betrifft die vorliegende Erfindung die Verwendung der vorstehend angegebenen Partikel zur Einstellung der Oberflächenenergie von Formkörpern oder Folien, bei denen die äußere Oberfläche mindestens teilweise durch eine Kunststoffzusammensetzung auf Basis eines thermoplastischen Elastomers gebildet ist.

Die Verwendung wird in einer Weise realisiert, dass die Partikel zu einem Anteil in die Kunststoffzusammensetzung einbezogen werden, dass die jeweilige Eigenschaft um mindestens 10%, bevorzugt mindestens 20%, weiter bevorzugt mindestens 30% und noch weiter bevorzugt mindestens 40% gegenüber einer entsprechenden Kunststoffzusammensetzung verbessert wird, die keine solchen Partikel enthält.

Ein noch weiterer Aspekt der vorliegenden Erfindung betrifft die Verwendung von Partikeln, in denen die Polymere spezifische funktionelle Gruppen aufweisen, über die andere Komponente in die Partikeloberfläche angebunden werden können. Auf diese Weise kann der Vorteil erreicht werden, dass Verschweißungen der Oberflächen ermöglicht werden.

Durch die vorstehend angegebene Erfindung werden ergänzend zu den bereits vorstehend angegebenen Vorteilen und Effekten folgende vorteilhafte Wirkungen erzielt:
Durch die Partikelzusammensetzung wird eine homogene Verteilung der Partikel in der Kunststoffzusammensetzung und daraus gebildeten Filmen erzielt, was bei gängigen Prozessbedingungen diskrete Schnittkanten ermöglicht. Zudem werden Verklebungen und Kontamination geschnittener und gestanzter sowie perforierter Oberflächen sowie deren Kontamination reduziert ohne dass die mechanischen Filmeigenschaften dadurch in relevantem Umfang beeinträchtigt werden.

Durch den Einbezug der Partikel können thermoplastische Elastomere auf Polyester-, Polyolefin- und Polyurethanbasis auch eine bessere Haftung zur einem darauf aufgebrachten Lack aufweisen, ohne dass die Oberfläche durch das Aufbringen eines Primers zunächst klebrig gemacht werden muss. Somit können die Oberflächenenergien der Basispolymere maßgeschneidert eingestellt werden.

Durch erneutes Einschmelzen/Recycling der modifizieren Filme können die darin enthaltenen Partikel durch die prozessbedingte Scherung auch aufgebrochen werden, sodass neue Anbindungsstellen auch in Abmischung mit reinen/neuen Polymeren erreicht werden. Das angegebene Konzept kann daher zur Reduzierung von CO₂-Emissionen gegenüber einer thermischen Verwertung von Resten von wässrigen Dispersionen beitragen.

Im Folgenden soll die vorliegende Erfindung anhand von einigen Ausführungsbeispielen weiter illustriert werden, die nicht in irgendeiner Weise als beschränkend für den Schutzumfang der Anmeldung aufgefasst werden sollten.

### Beispiele:

Es wurden verschiedene Filme auf Basis von thermoplastischen Polyurethanen mit Polymer-Komplex Partikeln (wie oben beschrieben über komplexe Lackfällung hergestellt) als Bahnenware mit einer Foliendicke von bevorzugt 0,35 mm extrudiert. Die hierbei verwendeten Polymer-Komplex Partikel wurden wie folgt hergestellt: Eine Lackdispersion bestehend aus 55 Teilen einer aliphatischen Polyurethandispersion (Festgehalt etwa 35%, Alberdingk PUR Matt), 20 Teilen einer Dispersion eines Acrylsäureester-Copolymerisats (Festgehalt etwa 60% Alberdingk AC 75xxx FS), 20 Teilen einer aliphatische, polycarbonathaltige anionische Polyurethandispersion (Festgehalt etwa 35,% Bayhydrol UH) sowie je 0,5 Teilen Silikonentsäumer und Fließhilfsmittel und 4 Teilen Isopropanol (angenommener Feststoffgehalt der Lackdispersion ca. 40 Gew.-%) wurden 8 g Calciumchlorid hinzugefügt. Die resultierende Masse wurde für etwa 1h gerührt und dann eine einen in einem Vakuumtrockner überführt. In dem Vakuumtrockner wurden Wasser und Isopropanol und das Produkt als Granulat erhalten. das Granulat wurde anschließend noch mit einer Mühle auf die gewünschte Partikelgröße gemahlen (75 µm < 98%).

Die so erhaltenen Bahnenproben wurden Tests zur Bestimmung der mechanischen, visuellen/haptischen und Abriebeigenschaften unterzogen. Zusätzliche wurde aus den Proben abgegebene Mengen an VOC bestimmt. Die Ergebnisse dieser Untersuchungen sind in der folgenden Tabelle 1 wiedergegeben. Die Rezepturen V1 und V2 sind als Vergleichszusammensetzungen ohne Partikel darstellen:

**Tabelle 1**

| **Beispielrezeptur** | | **V1** | **1** | **V2** | **2** |
|---|---|---|---|---|---|
| aliphatisches TPU, Shore A 85 | | 100 | 100 | | |
| aromatisches TPU, Shore A 50 | | | | 100 | 100 |
| Farbe | | 0,2 | 0,2 | 0,2 | 0,2 |
| Additive (Gleitmittel) | | 6 | 6 | | 5,5 |
| Polymer-Komplex Partikel (98% < 75 µm) | | | 10 | | 10 |
| Foliendicke (mm) | | 0,35 | 0,35 | 0,35 | 0,35 |
| | visuell / Oberfläche | Oberfläche glänzend / glatt | Oberfläche matt / leicht rauh | Oberfläche klebrig; Material nur coextrudierbar | Oberfläche nicht klebrig; als Monofilm kalandrierbar / extrudierbar |

| **Prüfwerte** | **Norm** | | | | |
|---|---|---|---|---|---|
| Reißkraft (N/mm2) | ISO 527-3 | 37 | 34 | 29 | 27 |
| Reißdehnung (%) | ISO 527-3 | 735 | 740 | 810 | 810 |
| E 100 N/mm2 | ISO 527-3 | 5,2 | 5,2 | 1,8 | 2,4 |
| Martindale CD 10 / no visible change up to cycles | DIN EN ISO 5470-2 | 5000 | 8000 | 1000 | 1500 |
| Ballyflex 100.000 RT / rating | DIN EN ISO 32100 | 0 | 0 | 0 | 0 |
| Emissionen VOC/FOG (ppm) | VDA 278 | 87/223 | 98/256 | 67/246 | 84/306 |

Aus dem Vergleich der erfindungsgemäßen Zusammensetzungen mit den Vergleichszusammensetzungen wird ersichtlich, dass sich durch den Partikelzusatz (unabhängig von der Shore-Härte des Matrixpolymers) um mindestens 50% bessere Abriebwerte erzielen ließen, während die weiteren mechanischen Eigenschaften zwischen den erfindungsgemäßen und Referenzrezepturen nicht signifikant voneinander abwichen. In allen Fällen wurden Folien mit gleichwertiger Ballyflex Festigkeit (nach 100.000 Knickbeanspruchungen bei RT: gleichwertig und i.O.) erhalten. Auch die Emissionen (nach VDA 278) waren für die erfindungsgemäßen und Referenzrezepturen auf ähnlichem Niveau.

Unterschiede ergaben sich andererseits in der Haptik, bei der bei den erfindungsgemäßen Rezepturen ein trockenerer Griff und ein geringerer Oberflächenglanz erhalten wurde. Bei der Verarbeitung des thermoplastischen Polyurethans mit einer Shore Härte von 50 A wurde zudem beobachtet, dass ohne den Zusatz wegen der klebrigen Oberfläche des Materials nur einer Trennfolie möglich war, während die erfindungsgemäße Kunststoffzusammensetzung mit Partikeln als Monofilm extrudierbar und kalandrierbar war.

## Patentansprüche

1. Kunststoffzusammensetzung umfassend eine Matrix aus thermoplastischem Elastomer und ein darin dispergiertes Pulver, wobei das Pulver wasserunlösliche Partikel umfasst, die aus einem Komplex aus einem wasserdispergierbaren Polymer mit anionischen funktionellen Gruppen und mehrwertigen Metallkationen oder einem wasserdispergierbaren Polymer mit protonierten anionischen Gruppen gebildet sind.

2. Kunststoffzusammensetzung gemäß Anspruch 1, wobei das wasserdispergierbare Polymer auf Polyurethan, Polyurethan-Polyharnstoff, Polyester, Polyacrylat, Polyolefin, Polyvinylchlorid, Silikon, Siloxan, Polyvinylidenfluorid, Copolymeren, Blends oder Mischungen davon beruht, und bevorzugt anionische funktionelle Gruppen ausgewählt aus Carboxylatgruppen, Sulfatgruppen, Sulfonatgruppen, Phosphatgruppen oder Phosphonatgruppen aufweist.

3. Kunststoffzusammensetzung gemäß Anspruch 1 oder 2, wobei die wasserunlöslichen Partikel in dem Pulver eine Partikelgröße im Bereich von 1 bis 500 µm und vorzugsweise im Bereich von 5 bis 100 µm aufweisen.

4. Kunststoffzusammensetzung gemäß mindestens einem der Ansprüche 1 bis 3, wobei die mehrwertigen Metallkationen ausgewählt sind aus Calcium, Magnesium, Zink, Zinn, Eisen, Aluminium oder Kupfer.

5. Kunststoffzusammensetzung gemäß mindestens einem der vorangehenden Ansprüche, weiterhin enthaltend mindestens ein Additiv ausgewählt aus der Gruppe umfassend anorganische Füllstoffe, Hand-Modifier, Mattierungsmittel, Vernetzer, Nanopartikel, Stabilisatoren, Farbmittel und Pigmente enthält.

6. Kunststoffzusammensetzung gemäß mindestens einem der vorangehenden Ansprüche, wobei die wasserunlöslichen Partikel auf ungesättigten Acrylat-, ungesättigten Vinyl- oder ungesättigten Polyesterpolymeren beruhen, und durch Einwirkung von UV- oder Elektronenstrahlen vernetzt sind.

7. Schichtgebilde, insbesondere in Form einer ein- oder mehrschichtigen Folie, mit mindestens einer Schicht, die aus einer Kunststoffzusammensetzung gemäß einem der Ansprüche 1 bis 6 gebildet ist.

8. Schichtgebilde gemäß Anspruch 7, wobei die Kunststoffschicht die oberste strukturelle Schicht des Schichtgebildes bildet.

9. Schichtgebilde nach Anspruch 7 oder 8, wobei die Schicht aus der Kunststoffzusammensetzung so ausgebildet ist, das Partikel in der Schicht haptisch aus der Schicht erkennbar sind.

10. Verwendung von wasserunlöslichen Partikeln, die aus einem Komplex aus einem wasserdispergierbaren Polymer mit anionischen funktionellen Gruppen und mehrwertigen Metallkationen gebildet sind, zur Einstellung von Oberflächeneigenschaften von Kunststofffilmen, die aus einer Kunststoffmatrix aus thermoplastischen Elastomer und Partikeln, wie sie in einem der Ansprüche 1 bis 6 angegeben sind, gebildet sind.

11. Verwendung von wasserunlöslichen Partikeln, die aus einem Komplex aus einem wasserdispergierbaren Polymer mit anionischen funktionellen Gruppen und mehrwertigen Metallkationen gebildet sind, zur Verminderung der Haftung einer Kunststoffzusammensetzung auf Metalloberflächen bei erhöhten Temperaturen und/oder zur Verbesserung der Abriebeigenschaften und/oder zur Einstellung der Oberflächenenergie.

12. Verwendung von aus einer Kunststoffzusammensetzung gemäß einem der Ansprüche 1 bis 6 gebildeten strukturierten Oberflächen zur Vermittlung von Anti-Blockeigenschaften an die Oberfläche.

13. Förderband, Kunstleder oder Antriebsriemen mit einer strukturierten äußeren Oberfläche, wobei die Oberfläche aus eine Kunststoffzusammensetzung gemäß einem der Ansprüche 1 bis 6 gebildet ist.

14. Schlauch für den Transport von Gasen, Feststoffen oder Flüssigkeiten, wobei der Schlauch eine Innenseite und eine Außenseite aufweist und wobei die Innenseite des Schlauchs aus einer erfindungsgemäßen Kunststoffzusammensetzung gebildet ist.
